# EUROPÄISCHE PATENTSCHRIFT

(11) **EP 1 986 172 B1**
(45) Veröffentlichungstag und Bekanntmachung des Hinweises auf die Patenterteilung: **13.06.2012**
(21) Anmeldenummer: 07008221.9
(22) Anmeldetag: 23.04.2007
(51) Int. Cl.: G08G 1/14, G07B 15/00, G06Q 10/02, G07F 17/24

(54) **Verfahren zur Reservierung einer Dienstleistung aus einem Fahrzeug**
Method to reserve a service from a vehicle
Procédé pour réserver un service par un véhicule

(43) Veröffentlichungstag der Anmeldung: 29.10.2008
(73) Patentinhaber: SkiData AG, 5083 Gartenau (AT)
(72) Erfinder: Fox, Dirk, 83483 Bischofswiesen (DE); Ponert, Gregor, 5020 Salzburg (AT)
(74) Vertreter: Karakatsanis, Georgios

(56) Entgegenhaltungen:
- EP-A1- 1 306 784
- US-A- 5 877 704
- US-A1- 2004 068 433
- US-A1- 2005 057 373
- US-A1- 2006 250 278
- US-B1- 6 970 101

## Beschreibung

Die Erfindung bezieht sich auf ein Verfahren zur Reservierung einer Leistung aus einem Fahrzeug bei einer von mehreren die Leistung erbringenden Einrichtungen.

Wenn ein Autofahrer eine Leistung in Anspruch nehmen möchte und dazu mit seinem Fahrzeug eine Einrichtung ansteuert, die diese Leistung erbringt, kann es vorkommen, dass die Leistung nicht mehr verfügbar ist, wenn er die Einrichtung erreicht. Es müssen dann oft längere Fahrten in Kauf genommen werden, bis der Autofahrer eine Einrichtung findet, bei der er die Leistung in Anspruch nehmen kann.

So fährt zum Beispiel in einem Gebiet, beispielsweise einer Stadt, wo mehrere Parkhäuser oder dergleichen Parkflächen vorhanden sind, der Autofahrer normalerweise die Parkfläche an, die sich einerseits möglichst nahe an seinem Zielort befindet und bei der andererseits noch ein freier Stellplatz zu erwarten ist. Häufig wird diese Erwartung jedoch enttäuscht, sodass oft längere Fahrten von Parkfläche zu Parkfläche erforderlich sind, bis der Autofahrer endlich einen freien Stellplatz findet.

Aufgabe der Erfindung ist es, die Suche nach einer Einrichtung, bei der die gewünschte Leistung noch verfügbar ist, wesentlich zu vereinfachen.

Dies wird erfindungsgemäß mit dem im Anspruch 1 gekennzeichneten Verfahren erreicht. In den Unteransprüchen sind vorteilhafte Ausführungsformen des erfindungsgemäßen Verfahrens wiedergegeben.

Dokumente US 5 877 704 A und US 2006/0 250 278 A1 beschreiben Systeme zur Parkplatzreservierung.

Um eine die Leistung erbringende Einrichtung zu finden und dort eine Leistung zu reservieren, ist erfindungsgemäß das Fahrzeug mit einer Navigationseinrichtung versehen, die beispielsweise ein GPS-Navigationsgerät aufweist. Das Navigationsgerät kann dabei im Fahrzeug installiert oder eine tragbares Navigationsgerät sein, das im Fahrzeug mitgeführt wird. Die Navigationseinrichtung ist zur Datenkommunikation mit einem Reservierungsserver ausgebildet, dem die verfügbaren Leistungen der einzelnen die Leistung erbringenden Einrichtungen übermittelt wird.

Dazu kann jede leistungserbringende Einrichtung eine Datenbank zugeordnet sein, von der der Reservierungsserver die verfügbaren Leistungen der betreffenden Einrichtungen abfragt.

Der Benutzer, also der Autofahrer oder ein sonstiger Fahrzeuginsasse, wählt in einem ersten Schritt die Einrichtung aus, bei der er eine Leistung in Anspruch nehmen möchte. Dazu kann er in das Navigationsgerät seine Zieladresse bzw. ein Zielgebiet eingeben, worauf am Display des Navigationsgeräts eine oder mehrere in der Nähe der Zieladresse liegende die gewünschte Leistung erbringende Einrichtungen angezeigt werden. Davon wählt der Benutzer eine aus.

Der vom Benutzer ausgewählten Einrichtung werden dann Identifikationsdaten zugeordnet, die zur Reservierung benutzt werden können. Diese Identifikationsdaten können beispielsweise die Ortskoordinaten der betreffenden Einrichtung sein, die das Navigationsgerät anzeigt. Mit diesen Identifikationsdaten kann der Benutzer dann per Datenkommunikation eine Reservierungsanfrage an den Reservierungsserver mit der zur Datenkommunikation ausgebildeten Navigationseinrichtung auslösen.

Ein zusätzliches Kommunikationsendgerät ist vorgesehen um die Navigationseinrichtung zur Datenkommunikation mit den Reservierungsserver auszubilden. Das zusätzliche Kommunikationsendgerät kann beispielsweise ein Mobiltelefon oder eine Wireless LAN-Verbindung sein. Der Reservierungsserver kann online die verfügbaren Leistungen der gewählten Einrichtung abfragen und die Information an das Kommunikationsendgerät bzw. direkt an die Navigationseinrichtung zurückmelden.

Falls keine Leistung verfügbar ist, kann der Reservierungsserver über die Navigationseinrichtung dem Benutzer die nächste Einrichtung mit verfügbaren Leistungen mitteilen, damit er dort eine Reservierung der Leistung vornehmen kann.

Bei verfügbarer Leistung führt der Benutzer die Reservierung durch, d. h. er bestätigt die Reservierung mit der Navigationseinrichtung bzw. dem Kommunikationsendgerät. Dabei werden an den Reservierungsserver dem Benutzer zugeordnete Identifikationsdaten übermittelt.

Die dem Benutzer zugeordneten Identifikationsdaten können beispielsweise Identifikationsdaten des Navigationsgeräts oder des Kommunikationsendgerätes sein, also beispielsweise die Telefonnummer des Mobiltelefons. Es kann sich hierbei jedoch auch um andere dem Benutzer bzw. Fahrzeug eindeutig zugeordnete Daten handeln, beispielsweise das polizeiliche Kennzeichen des Fahrzeugs. Die Identifikationsdaten können auch in einem gesonderten elektronischen Datenträger, z. B. einer Karte, abgelegt sein.

Die Reservierung und die dem Benutzer zugeordneten Identifikationsdaten können von dem Reservierungsserver online an die Datenbank der betreffenden die Leistung erbringenden Einrichtung übermittelt werden. Wenn der Benutzer dann an der die Leistung erbringenden Einrichtung eintrifft, werden mit einer Leseeinrichtung an dieser Einrichtung, die an die Datenbank der die Leistung erbringenden Einrichtung bzw. an die Reservierungsserver angeschlossen ist, die Identifikationsdaten gelesen, die dem Benutzer zugeordnet sind. Die Identifikationsdaten können von der Leseeinrichtung an der die Leistung erbringenden Einrichtung per RFID, beispielsweise durch Near-Field-Communication (NFC) ausgelesen werden. Die dem Benutzer zugeordneten Identifikationsdaten können dann auch Identifikationsdaten des NFC-Gerätes (z.B. eine Seriennummer) sein.

Wenn es sich bei den Identifikationsdaten um das polizeiliche Kennzeichen des Kraftfahrzeuges handelt, kann eine zum Lesen von Kraftfahrzeugkennzeichen ausgebildete Leseeinrichtung an der Einfahrt der die Leistung erbringenden Einrichtung verwendet werden.

Bei Übereinstimmung der mit der Leseeinrichtung gelesenen Identifikationsdaten des Benutzers mit den vom Reservierungsserver übermittelten Identifikationsdaten des Benutzers wird die Berechtigung zur Inanspruchnahme der Leistung erteilt.

Die zur Reservierung verwendeten Identifikationsdaten des Benutzers, also beispielsweise das polizeiliche Kennzeichen des Kraftfahrzeuges oder die Identifikationsdaten der Navigationseinrichtung, des Kommunikationsendgerätes oder die auf dem elektronischen Datenträger abgelegten Identifikationsdaten, können auch zur Bezahlung der in Anspruch genommenen Leistung benutzt werden.

Die die Leistung erbringende Einrichtung kann eine Parkfläche und die Leistung ein Stellplatz für das Fahrzeug auf der Parkfläche sein. Die Leseeinrichtung ist dabei an der Einfahrt zur Parkfläche vorgesehen. Die Parkfläche kann ein Parkhaus oder ein offener Parkplatz sein.

Wenn ein Stellplatz auf einer Parkfläche reserviert worden ist, wird bei Übereinstimmung der mit der Leseeinrichtung gelesenen Identifikationsdaten des Benutzers mit den vom Reservierungsserver übermittelten Identifikationsdaten des Benutzers die Einfahrt freigegeben und dem Benutzer ein Stellplatz zugewiesen.

Dazu kann die Parkfläche eine Einrichtung zur Einzelstellplatzüberwachung oder eine Etagenzählung aufweisen. Die Einrichtung zur Einzelüberwachung oder die Etagenzählung wird dann abgefragt und der freie Stellplatz dem Benutzer an der Einfahrt mitgeteilt. Dazu kann an der Einfahrt eine Anzeigeeinrichtung vorgesehen oder der freie Stellplatz an dem Display des Navigationsgerätes bzw. des Mobiltelefons angezeigt werden. Auch ist eine akustische Anzeige möglich, beispielsweise durch den Lautsprecher des Navigationsgeräts bzw. des Mobiltelefons.

Gegebenenfalls kann an der Einfahrt ein Drucker vorgesehen sein, der die Nummer des dem Benutzer zugewiesenen Stellplatzes und/oder die Etage auf einem Ticket ausdruckt, das der Benutzer erhält.

Die zugewiesene Stellfläche wird nach der Zuweisung reserviert. Dies kann optional durch eine Signalisierung an der Stellfläche erfolgen, beispielsweise durch eine Lichtanzeige oder per Displaynachricht. So können beispielsweise der Name, das polizeiliche Kennzeichen des Kraftfahrzeuges oder andere Identifikationsdaten angezeigt werden.

Die Erfindung ist jedoch nicht auf die Reservierung eines Stellplatzes auf einer Parkfläche beschränkt, sondern generell dazu bestimmt, eine Leistung von einem Fahrzeug zu reservieren, nachdem eine von mehreren die Leistungen erbringenden Einrichtungen ausgewählt worden ist. Dabei kann die die Leistung erbringende Einrichtung irgendein Point-of-Interest sein. Beispielsweise kann der Point-of-Interest bzw. die die Leistung erbringende Einrichtung ein Restaurant oder ein Hotel sein und die Leistung ein Sitzplatz in dem Restaurant bzw. ein Zimmer in dem Hotel. Die Leseeinrichtung kann dann am Eingang, an der Rezeption oder z. B. an der Zimmertür vorgesehen sein. Ferner kann die Einrichtung, die die Leistung erbringt, ein Kino, Theater oder dergleichen Veranstaltungsort mit Sitzplätzen sein. Die dem Benutzer zugeordneten Identifikationsdaten können z. B. auf einem Datenträger abgelegt sein, den der Benutzer mit sich führt.

Statt dessen kann der Point-of-Interest beispielsweise auch eine Freizeiteinrichtung sein. So kann beispielsweise auf der Fahrt zu einem Zielgebiet, beispielsweise einer Stadt, sich der Benutzer auf dem Display des Navigationsgerätes mehrere im Zielgebiet liegende Freizeiteinrichtungen anzeigen lassen, beispielsweise ein Sportstadion, ein Kino, eine Badeanstalt und dergleichen, wobei er mit der Navigationseinrichtung eine der Freizeiteinrichtungen auswählt. Er kann dann mit der Navigationseinrichtung eine Reservierungsanfrage zusammen mit der der Freizeiteinrichtung zugeordneten Identifikationsdaten an den Reservierungsserver auslösen, an den die Verfügbarkeit freier Plätze der einzelnen Freizeiteinrichtungen übermittelt wird. Bei der Freizeiteinrichtung, bei der noch Plätze verfügbar sind, führt der Benutzer dann mit der zur Datenkommunikation ausgebildeten Navigationseinrichtung über den Reservierungsserver eine Reservierung durch.

Ferner kann der Point-of-Interest z. B. eine Transporteinrichtung sein, beispielsweise eine Freizeittransporteinrichtung, wie ein Skilift oder eine Seilbahn.

So können beispielsweise auf der Fahrt zu einem Skigebiet mehrere Lifte und dergleichen Personentransporteinrichtungen auf dem Display des Navigationsgerätes angezeigt werden, von denen der Benutzer eine auswählt. Um eine Auswahl zu treffen, kann mit der Navigationseinrichtung eine Reservierungsanfrage zusammen mit den der Personentransporteinrichtung zugeordneten Identifikationsdaten an den Reservierungsserver ausgelöst werden, an den die Verfügbarkeit der einzelnen Personentransporteinrichtungen beispielsweise in Form der Wartezeit übermittelt wird.

Der Benutzer führt dann mit der zur Datenkommunikation ausgebildeten Navigationseinrichtung über den Reservierungsserver bei der Transporteinrichtung mit entsprechend kurzer Wartezeit durch. Dazu werden mit der Navigationseinrichtung dem Reservierungsserver die dem Benutzer zugeordneten Identifikationsdaten übermittelt. Bei den Freizeit- bzw. Transporteinrichtungen kann die Leseeinrichtung z. B. am Zugang vorgesehen sein. Beim Zutritt zu der Freizeit- bzw. Transporteinrichtung werden mit der Leseeinrichtung beispielsweise von einem Datenträger, den der Benutzer mit sich führt, die dem Benutzer zugeordneten Identifikationsdaten gelesen. Zugleich werden die Benutzer-Identifikationsdaten bei der Reservierung von den Reservierungsserver an die ausgewählte Einrichtung übermittelt und der Leseeinrichtung zugeführt. Bei Übereinstimmung mit den vom Reservierungsserver übermittelten Identifikationsdaten des Benutzers und den mit der Leseeinrichtung gelesenen Benutzer-Identifikationsdaten wird der Zugang zu der Freizeit- bzw. Transporteinrichtung freigegeben.

Statt eines Lifts bzw. einer Personentransporteinrichtung kann der Point-of-Interest bzw. die die Leistung erbringende Einrichtung z. B. auch eine von mehreren Skiregionen sein, die in einem größeren Skigebiet liegen. Dabei wird bei Übereinstimmung der mit einer Leseeinrichtung der Skiregion von dem Datenträger ausgelesenen dem Benutzer zugeordneten Identifikationsdaten mit den dem Reservierungsserver übermittelten Identifikationsdaten die Berechtigung zur Inanspruchnahme aller, jedenfalls mehrerer Lifte und dergleichen Personentransporteinrichtungen dieser Skiregion erteilt wird.

Die Zuordnung der Reservierung zu einem bestimmten Sitzplatz, Stellplatz bzw. Raum kann beim Eintreffen an der Einrichtung nach Lesen der Benutzer Identifikation durchgeführt werden. Zudem kann eine optische oder mechanische Reservierung des Stell- bzw. Sitzplatzes oder Raumes erfolgen. So kann die optische Reservierung eines Stellplatzes beispielsweise durch Wiedergabe des polizeilichen Kennzeichens des Kraftfahrzeuges auf einen Display erfolgen, die mechanische Reservierung beispielsweise eines Raumes mit einem Schlüssel oder beispielsweise eines Stellplatzes mit einer mechanischen Sperre.

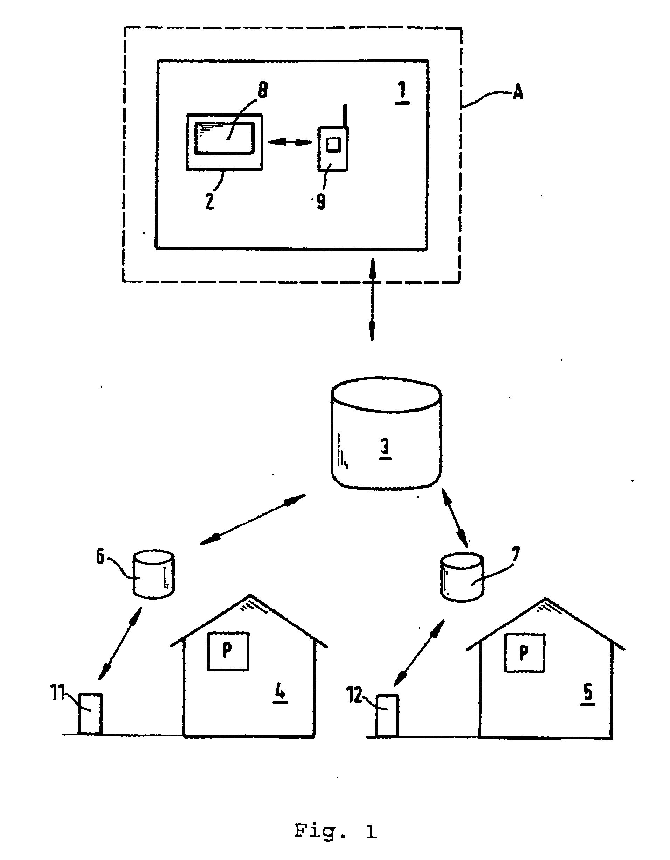

Nachstehend ist die Erfindung am Beispiel einer Stellplatzreservierung anhand der beigefügten Zeichnung näher erläutert, deren einzige Figur schematisch die einzelnen Abläufe der Reservierung wiedergibt.

Nachstehend ist eine Ausführungsform der Erfindung anhand der beigefügten Zeichnung näher erläutert, deren einzige Figur schematisch die einzelnen Abläufe einer Stellplatzreservierung wiedergibt.

Danach ist das Fahrzeug A mit einer Navigationseinrichtung 1 versehen, die beispielsweise ein GPS-Navigationsgerät 2 aufweist. Die Navigationseinrichtung 1 ist zur Datenkommunikation mit einem Reservierungsserver 3 ausgebildet, an den die Verfügbarkeit freier Stellplätze der einzelnen Parkhäuser oder dergleichen Parkflächen 4, 5 übermittelt wird.

Dazu kann jeder Parkfläche 4, 5 eine Datenbank 6, 7 zugeordnet sein, von denen der Reservierungsserver 3 die Verfügbarkeit freier Stellplätze der Parkfläche 4, 5 abfragt.

Der Benutzer im Kraftfahrzeug A sucht in einem ersten Schritt die Parkfläche 4, 5, auf der er sein Fahrzeug abstellen möchte. Dazu kann er in das Navigationsgerät 2 seine Zieladresse eingeben, worauf das Display 8 des Navigationsgeräts die in der Umgebung der Zieladresse liegenden Parkflächen 4, 5 anzeigt.

Der Benutzer wählt eine der Parkflächen 4, 5 aus, wobei der gewählten Parkfläche 4, 5 Identifikationsdaten zugeordnet werden, die dann zur Reservierung verwendet werden. Diese Identifikationsdaten können beispielsweise die Koordinaten der Parkfläche 4, 5 sein, die das Navigationsgerät 2 anzeigt. Mit diesen Identifikationsdaten löst der Benutzer per Datenkommunikation eine Reservierungsanfrage an den Reservierungsserver 3 aus. Dazu kann die Navigationseinrichtung 1 zur direkten Datenkommunikation mit dem Reservierungsserver 3 ausgebildet sein. Stattdessen kann auch ein zusätzliches Kommunikationsendgerät 9 z. B. ein Mobiltelefon zur Datenkommunikation von dem Fahrzeug mit dem Reservierungsserver 3 verwendet werden. Der Reservierungsserver 3 fragt dann z.B. online die Verfügbarkeit von Stellplätzen von der Datenbank 6, 7 der betreffenden Parkfläche 4, 5 ab und meldet die abgefragte Information direkt an die Navigationseinrichtung 1 bzw. das Kommunikationsendgerät 9 zurück, teilt also mit, ob an der Parkfläche 4, 5 ein Stellplatz zur Verfügung steht oder nicht.

Falls kein Stellplatz verfügbar ist, kann der Reservierungsserver 3 dem Benutzer auf dem Display 8 des Navigationsgerätes 2 dann die nächste Parkfläche 4, 5 mit verfügbaren Stellplätzen mitteilen, damit er dort eine Stellplatzreservierung vornehmen kann.

Zur Stellplatzreservierung werden mit der Navigationseinrichtung 1 dem Reservierungsserver 3 die Reservierung zusammen mit den dem Benutzer zugeordneten Identifikationsdaten übermittelt.

Die dem Benutzer zugeordneten Identifikationsdaten können beispielsweise Identifikationsdaten des Navigationsgeräts 3 oder des Kommunikationsendgeräts 9 sein, beispielsweise die Telefonnummer des Mobiltelefons. Das Auslesen der Identifikationsdaten aus dem Navigationsgerät 3 kann beispielsweise durch Near-Field-Communication (NFC) erfolgen, also eine drahtlose Kommunikationstechnologie für Datenverbindungen über kurze Strecken.

Auch können die dem Benutzer zugeordneten Identifikationsdaten, die von dem Kommunikationsendgerät 9 z. B. per NFC gelesen und von dem Kommunikationsendgerät 9 an den Reservierungsserver 3 übertragen werden, auf einem elektronischen Datenträger, beispielsweise in einem RFID-Datenträger, z. B. einer RFID-Karte, abgelegt sein.

Die Reservierung und die dem Benutzer zugeordneten Identifikationsdaten werden an die Datenbank 6, 7 der Parkfläche 4, 5 übermittelt. Wenn der Benutzer mit dem Fahrzeug A dann an der Parkfläche 4, 5 eintrifft, werden mit einer Leseeinrichtung 11, 12 an der Einfahrt zu der Parkfläche 4, 5 die Identifikationsdaten des Benutzers gelesen. Dazu ist die Leseeinrichtung 11, 12 mit der Datenbank 6, 7 der betreffenden Parkfläche 4, 5 verbunden. Das Auslesen der Identifikationsdaten des Benutzers vom Navigationsgerät 2, dem Kommunikationsendgerät 9 bzw. dem Datenträger mit der Leseeinrichtung 11, 12 kann ebenfalls durch NFC erfolgen.

Bei Übereinstimmung der mit der Leseeinrichtung 11, 12 gelesenen Identifikationsdaten des Benutzers und den von dem Reservierungsserver 3 an die Datenbanken 6, 7 übermittelten Identifikationsdaten des Benutzers wird die Einfahrt freigegeben und dem Benutzer ein Parkplatz zugewiesen, beispielsweise durch Anzeige auf dem Display 8 des Navigationsgeräts 2.

## Patentansprüche

1. Verfahren zur Reservierung einer Leistung aus einem Fahrzeug (A) bei einer von mehreren die Leistung erbringenden Einrichtungen, wobei das Fahrzeug (A) eine Navigationseinrichtung (1) mit einem Navigationsgerät (2) und ein Kommunikationsendgerät (9) aufweist, welche zur Datenkommunikation mit einem Reservierungsserver (3) ausgebildet ist und an jeder der die Leistung erbringenden Einrichtungen eine Leseeinrichtung (11, 12) vorgesehen ist, wobei die Navigationseinrichtung (1) die die Leistung erbringenden Einrichtungen in einem ausgewählten Gebiet anzeigt, mit der Navigationseinrichtung (1) eine von den angezeigten die Leistung erbringenden Einrichtungen ausgewählt und dem Reservierungsserver (3) eine Reservierung der Leistung bei der ausgewählten die Leistung erbringenden Einrichtung mit dem Kommunikationsendgerät (9) zusammen mit dem Benutzer zugeordneten Identifikationsdaten übermittelt wird, wobei beim Erreichen der ausgewählten die Leistung erbringenden Einrichtung durch das Fahrzeug die Identifikationsdaten von der Leseeinrichtung (11, 12) aus dem Fahrzeug gelesen werden, wobei bei Übereinstimmung mit den dem Reservierungsserver (3) übermittelten Benutzer-Identifikationsdaten die Berechtigung zur Inanspruchnahme der Leistung erteilt wird, **dadurch gekennzeichnet, dass** die dem Benutzer zugeordneten Identifikationsdaten die Identifikationsdaten des Navigationsgeräts (2) oder des Kommunikationsendgerätes (9) sind oder auf einem elektronischen Datenträger abgelegt sind, der mit dem Kommunikationsendgerät (9) und der Leseeinrichtung (11, 12) an der die Leistung erbringenden Einrichtung ausgelesen werden kann, wobei das Navigationsgerät (2) und das Kommunikationsendgerät (9) und/oder der elektronische Datenträger und das Kommunikationsendgerät (9) durch einen Near-Field-Communication Standard in Verbindung stehen, und die dem Benutzer zugeordneten Identifikationsdaten von der Leseeinrichtung (11, 12) an der die Leistung erbringenden Einrichtung durch einen Near-Field-Communication Standard ausgelesen werden.

2. Verfahren nach Anspruch 1, **dadurch gekennzeichnet, dass** nach der Auswahl der die Leistung erbringenden Einrichtung und vor der Übermittlung der Reservierung der Leistung mit der zur Datenkommunikation ausgebildeten Navigationseinrichtung (1) eine Reservierungsanfrage zusammen mit Identifikationsdaten, die der ausgewählten, die Leistung erbringenden Einrichtung zugeordnet sind, an den Reservierungsserver (3) ausgelöst wird, an den die verfügbare Leistung der ausgewählten die Leistung erbringenden Einrichtung übermittelt wird.

3. Verfahren nach Anspruch 2, **dadurch gekennzeichnet, dass** die der Leistung erbringenden Einrichtung zugeordneten Identifikationsdaten, die von der Navigationseinrichtung (1) angegebenen Ortskoordinaten der die Leistung erbringenden Einrichtung sind.

4. Verfahren nach Anspruch 1, **dadurch gekennzeichnet, dass** der Reservierungsserver (3) mit einer Datenbank (6, 7) der die Leistung erbringenden Einrichtungen in Verbindung steht, in der die verfügbare Leistung der einzelnen die Leistung erbringenden Einrichtungen abgelegt ist.

5. Verfahren nach einem der vorstehenden Ansprüche, **dadurch gekennzeichnet, dass** die die Leistung erbringende Einrichtung eine Parkfläche (4, 5) und die Leistung ein Stellplatz für das Fahrzeug auf der Parkfläche (4, 5) ist.

6. Verfahren nach Anspruch 5, **dadurch gekennzeichnet, dass** der dem Benutzer zugewiesene Stellplatz auf der Parkfläche (4, 5) auf einer Anzeigeeinrichtung (8) im Fahrzeug und/oder an der Einfahrt zur Parkfläche (4, 5) dem Benutzer mitgeteilt wird.

7. Verfahren nach Anspruch 5, **dadurch gekennzeichnet, dass** der dem Benutzer zugewiesene Stellplatz auf der Parkfläche (4, 5) mit einem an der Einfahrt vorgesehenen Drucker auf ein Ticket aufgedruckt wird.

8. Verfahren nach einem der Ansprüche 1 bis 4, **dadurch gekennzeichnet, dass** die die Leistung erbringend Einrichtung Räume oder Sitzplätze aufweist.

9. Verfahren nach Anspruch 5 oder 8, **dadurch gekennzeichnet, dass** die Zuordnung der Reservierung zu einem bestimmten Stellplatz, Sitzplatz bzw. Raum beim Eintreffen an der Einrichtung nach Lesen der Benutzer- Identifikationsdaten erfolgt.

10. Verfahren nach Anspruch 5 oder 8, **dadurch gekennzeichnet, dass** eine optische oder mechanische Reservierung des Stellplatzes, Sitzplatzes bzw. Raumes durchgeführt wird.

11. Verfahren nach einem der Ansprüche 1 bis 4, **dadurch gekennzeichnet, dass** die die Leistung erbringende Einrichtung eine Freizeiteinrichtung ist.

12. Verfahren nach einem der Ansprüche 1 bis 4, **dadurch gekennzeichnet, dass** die die Leistung erbringende Einrichtung eine Transporteinrichtung ist.

## Claims

1. A method for reserving a service from a vehicle (A) at one of several facilities rendering the service, wherein the vehicle (A) comprises a navigation facility (1) having a navigation device (2) and a communication device (9), which navigation facility is designed for data communication with a reservation server (3) and whereby a reading facility (11, 12) is provided at each of the facilities rendering the service, wherein the navigation facility (1) indicates the facilities rendering the service in a selected area, the navigation facility (1) being used to select one of the facilities indicated as rendering the service and communicating a reservation of the service at the selected facility rendering the service by means of the communication device (9) to the reservation server (3) together with identification data allocated to the user, wherein, when the vehicle reaches the selected facility rendering the service, the identification data is read by the reading facility (11, 12) from the vehicle, wherein when the user identification data communicated to the reservation server (3) matches, permission is granted to use the service,
**characterised in that**
the identification data allocated to the user is the identification data of the navigation device (2) or the communication device (9) or is stored on an electronic data carrier which can be read by the communication device (9) and the reading facility (11, 12) at the facility rendering the service, wherein the navigation device (2) and the communication device (9) and/or the electronic data carrier and the communication device (9) are in communication via a near-field-communication standard, and the identification data allocated to the user is read by the reading facility (11, 12) at the facility rendering the service by a near-field-communication standard.

2. The method according to claim 1, **characterised in that** after selecting the facility rendering the service and prior to communicating reservation of the service with the aid of the navigation facility (1) designed for data communication, a reservation query is triggered to go together with identification data allocated to the selected facility rendering the service to that reservation server (3) to which the available service of the selected facility rendering the service is communicated.

3. The method according to claim 2, **characterised in that** the identification data allocated to the facility rendering the service is the location coordinates indicated by the navigation facility (1), of the facility rendering the service.

4. The method according to claim 1, **characterised in that** the reservation server (3) is in communication with a data base (6, 7) of the facilities rendering the service, in which data base the available service of the individual facilities rendering the service is stored.

5. The method according to one of the preceding claims, **characterised in that** the facility rendering the service is a parking area (4, 5) and the service is a parking space for the vehicle in the parking area (4, 5).

6. The method according to claim 5, **characterised in that** the parking space allocated to the user in the parking area (4, 5) is communicated to the user on an indicating facility (8) in the vehicle and/or at the entry to the parking area (4, 5).

7. The method according to claim 5, **characterised in that** the parking space allocated to the user in the parking area (4, 5) is printed on a ticket by a printer provided at the entry.

8. The method according to one of claims 1 to 4, **characterised in that** the facility rendering the service comprises rooms or seats.

9. The method according to one of claims 5 or 8, **characterised in that** allocation of the reservation of a particular parking space, seat or room takes place on arrival at the facility after reading the user identification data.

10. The method according to one of claims 5 or 8, **characterised in that** an optical or mechanical reservation of the parking space, seat or room is carried out.

11. The method according to one of claims 1 to 4, **characterised in that** the facility rendering the service is a leisure facility.

12. The method according to one of claims 1 to 4, **characterised in that** the facility rendering the service is a transport facility.

## Revendications

1. Procédé pour réserver une prestation à partir d'un véhicule (A) sur l'un de plusieurs dispositifs fournissant la prestation, le véhicule (A) présentant un système de navigation (1) avec un appareil de navigation (2) et un terminal de communication (9), lequel est conçu pour la communication de données avec un serveur de réservation (3) et un dispositif de lecture (11, 12) étant prévu sur chacun des dispositifs fournissant la prestation, le système de navigation (1) affichant les équipements fournissant la prestation dans une zone sélectionnée, l'un des dispositifs affichés et fournissant la prestation étant choisi avec le système de navigation (1) et une réservation de la prestation étant transmise au serveur de réservation (3) sur l'équipement sélectionné et fournissant la prestation avec le terminal de communication (9) en même temps que des données d'identification attribuées à l'utilisateur, les données d'identification étant lues par le dispositif de lecture (11, 12) à partir du véhicule lorsque le véhicule atteint le dispositif sélectionné et fournissant la prestation, l'autorisation pour le recours à la prestation étant accordée en cas de concordance avec les données d'identification d'utilisateur transmises au serveur de réservation (3), **caractérisé en ce que** les données d'identification attribuées à l'utilisateur sont les données d'identification de l'appareil de navigation (2) ou du terminal de communication (9) ou sont déposées sur un support de données électronique, lequel peut être lu avec le terminal de communication (9) et le dispositif de lecture (11, 12)) sur le dispositif fournissant la prestation, l'appareil de navigation (2) et le terminal de communication (9) et/ou le support de données électronique et le terminal de communication (9) étant en liaison par un Near-Field-Communication-Standard, et les données d'identification attribuées à l'utilisateur étant lues par le dispositif de lecture (11, 12) sur l'équipement fournissant la prestation par un Near-Field-Communication-Standard.

2. Procédé selon revendication 1, **caractérisé en ce que**, après le choix du dispositif fournissant la prestation et avant la transmission de la réservation de la prestation avec le système de navigation (1) conçu pour la communication de données, une demande de réservation est déclenchée, en même temps que des données d'identification, qui sont attribuées au dispositif sélectionné et fournissant la prestation, sur le serveur de réservation (3), auquel la prestation disponible du dispositif sélectionné et fournissant la prestation est transmise.

3. Procédé selon la revendication 2, **caractérisé en ce que**, les données d'identification attribuées au dispositif fournissant la prestation sont les coordonnées locales, indiquées par le système de navigation (1), du dispositif fournissant la prestation.

4. Procédé selon la revendication 1, **caractérisé en ce que** le serveur de réservation (3) est en liaison avec une banque de données (6, 7) de dispositifs fournissant la prestation, dans laquelle la prestation disponible des dispositifs individuels et fournissant la prestation est déposée.

5. Procédé selon l'une des revendications précédentes, **caractérisé en ce que** le dispositif fournissant la prestation est une aire de stationnement (4, 5) et la prestation un emplacement de stationnement pour le véhicule sur l'aire de stationnement (4, 5).

6. Procédé selon la revendication 5, **caractérisé en ce que** l'emplacement de stationnement attribué à l'utilisateur sur l'aire de stationnement (4, 5) est communiqué à l'utilisateur sur un dispositif d'affichage (8) dans le véhicule et/ou à l'entrée de l'aire de stationnement (4, 5).

7. Procédé selon la revendication 5, **caractérisé en ce que** l'emplacement de stationnement attribué à l'utilisateur sur l'aire de stationnement (4, 5) est imprimé sur un ticket avec une imprimante prévue à l'entrée.

8. Procédé selon l'une des revendications 1 à 4, **caractérisé en ce que** le dispositif fournissant la prestation présente des espaces ou des places assises.

9. Procédé selon la revendication 5 ou 8, **caractérisé en ce que** l'attribution de la réservation à un emplacement de stationnement défini, une place assise définie ou un espace défini intervient lors de l'arrivée sur le dispositif après la lecture des données d'identification d'utilisateur.

10. Procédé selon la revendication 5 ou 8, **caractérisé en ce qu'**une réservation optique ou mécanique de l'emplacement de stationnement, de la place assise ou de l'espace est effectuée.

11. Procédé selon l'une des revendications 1 à 4, **caractérisé en ce que** l'équipement fournissant la prestation est un dispositif de loisir.

12. Procédé selon l'une des revendications 1 à 4, **caractérisé en ce que** le dispositif fournissant la prestation est un dispositif de transport.
